(19) Europäisches Patentamt
European Patent Office
Office européen des brevets

(11) **EP 2 494 642 B1**

(12) **FASCICULE DE BREVET EUROPEEN**

(45) Date de publication et mention
de la délivrance du brevet:
**13.12.2017 Bulletin 2017/50**

(21) Numéro de dépôt: **10768976.2**

(22) Date de dépôt: **27.10.2010**

(51) Int Cl.:
*H01M 8/0444* (2016.01)    *H01M 8/04858* (2016.01)
*H01M 8/04089* (2016.01)    *H01M 8/04082* (2016.01)
*H01M 8/04223* (2016.01)    *H01M 8/04537* (2016.01)
*H01M 8/04664* (2016.01)    *H01M 8/04746* (2016.01)

(86) Numéro de dépôt international:
**PCT/EP2010/066259**

(87) Numéro de publication internationale:
**WO 2011/051338 (05.05.2011 Gazette 2011/18)**

(54) **PILE A COMBUSTIBLE ET PROCEDURE D'ARRÊT D'UNE PILE A COMBUSTIBLE**

BRENNSTOFFZELLE UND VERFAHREN ZUM STOPPEN EINER BRENNSTOFFZELLE

FUEL CELL AND METHOD FOR STOPPING A FUEL CELL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2009 FR 0957644**

(43) Date de publication de la demande:
**05.09.2012 Bulletin 2012/36**

(73) Titulaire: **Compagnie Générale des Etablissements Michelin**
**63000 Clermont-Ferrand (FR)**

(72) Inventeur: **PAGANELLI, Gino**
**1741 Cottens (CH)**

(74) Mandataire: **Roussy, Delphine**
**Manufacture Française des Pneumatiques Michelin**
**23, place des Carmes-Déchaux**
**DGD/PI - F35 - Ladoux**
**63040 Clermont-Ferrand Cedex 9 (FR)**

(56) Documents cités:
**EP-A2- 1 487 044    WO-A1-2006/012954**
**WO-A1-2008/081979    FR-A1- 2 917 536**
**GB-A- 2 453 126    JP-A- 3 081 970**
**US-A1- 2003 039 869    US-A1- 2007 154 742**
**US-A1- 2007 193 340    US-A1- 2009 220 832**

## Description

*DOMAINE DE L'INVENTION*

La présente invention se rapporte aux piles à combustibles, en particulier mais non exclusivement aux piles à combustible du type à électrolyte sous la forme d'une membrane polymère (c'est à dire de type PEFC pour Polymer Electrolyte Fuel Cell).

*ETAT DE LA TECHNIQUE*

On sait que les piles à combustibles permettent la production directe d'énergie électrique par une réaction électrochimique d'oxydoréduction à partir d'hydrogène (le carburant) et d'oxygène (le comburant), sans passer par une conversion en énergie mécanique. Cette technologie semble prometteuse notamment pour des applications automobiles. Une pile à combustible comporte en général l'association en série d'éléments unitaires qui, chacun, sont constitués essentiellement d'une anode et d'une cathode séparées par une membrane polymère permettant le passage d'ions de l'anode à la cathode.

La sous alimentation en hydrogène (pénurie d'H2 ou H2 starvation) est connue comme étant une source majeure de dégradation des catalyseurs de piles à combustible de type PEFC. La sous alimentation en hydrogène doit absolument être évitée pendant le fonctionnement de façon à éviter la corrosion du carbone généralement utilisé comme support du catalyseur des piles à combustible PEFC, mais selon l'expérience de l'inventeur il faut également garantir la présence d'hydrogène à l'anode pendant la phase d'arrêt de la pile à combustible et pendant que la pile à combustible est au repos.

D'une façon générale, l'extinction d'une pile à combustible est réalisée en prolongeant la réaction électrochimique normale de la pile à combustible jusqu'à l'écroulement de la tension dû à la consommation complète d'au moins un des gaz résiduel. Pour limiter les mécanismes de dégradation évoqués ci-dessus, il faut garantir que l'oxygène s'épuise avant l'hydrogène. Il faut donc assurer que la pile à combustible soit alimentée en hydrogène à l'anode jusqu'à la fin de l'extinction.

Il faut aussi garantir la présence d'hydrogène à l'anode pendant le repos de façon à la maintenir à un potentiel électrochimique de 0V RHE (RHE est l'abréviation de « Reference Hydrogen Electrode » ; une tension exprimée en V RHE est donc un potentiel électrochimique relatif à celui de l'hydrogène). L'hydrogène pur n'étant pas recommandé pour des raisons de sécurité, un mélange d'hydrogène et d'azote est dès lors préconisé pour les phases de repos.

Pour garantir la présence d'hydrogène à l'anode pendant les phases d'arrêt, la demande de brevet WO06/012954 propose de purger l'oxygène excédentaire à l'atmosphère. Cependant il faut pour cela que la pression cathode soit suffisamment élevée, ce qui ne peut pas toujours être garantie. D'autre part, au terme de cette procédure, au cours de laquelle de l'air est naturellement aspiré par dépression, la pression résiduelle dans le circuit cathodique est au maximum égale à la pression atmosphérique. En refroidissant, la pression tendra à tomber sous la pression atmosphérique ce qui accélérera la migration d'air vers l'intérieur de la pile à combustible dont le contenu en oxygène va réagir avec l'hydrogène résiduel contribuant ainsi à une pénurie rapide en hydrogène.

Le document US 6,939,633 propose un dispositif pour générer de l'azote sous pression à partir de l'air ambiant. Pour cela il est proposé de mettre en oeuvre un réacteur sur le circuit cathodique dans lequel on fait réagir l'oxygène de l'air introduit dans la pile à combustible au moyen d'une source de pression avec de l'hydrogène provenant du réservoir principal. Cependant aucune disposition n'est prise pour prévenir la pénurie d'hydrogène. Au contraire, la procédure proposée prévoit que la pile à combustible soit laissée avec de l'air présent à l'anode et à la cathode (Col. 8, ligne 29-31). D'autre part cette solution est complexe et elle nécessite l'adjonction d'un réacteur catalytique sur le circuit cathodique. Même si la possibilité d'utiliser le catalyseur déjà présent dans la pile à combustible est évoquée (col. 7, ligne 59-64), dans les deux cas, l'hydrogène et l'oxygène de l'air réagissent directement sur un catalyseur sans produire d'électricité mais uniquement de la chaleur. Enfin, cette solution nécessite deux communications entre le circuit anodique et cathodique, une première vanne (344) pour introduire de l'hydrogène à la cathode afin de faire réagir l'oxygène de l'air, une deuxième vanne (346) pour inonder l'anode avec l'azote généré à la cathode, ce qui compromet la sécurité en cas de défaillance d'une de ces vannes (ouverture intempestive ou fuite).

La demande de brevet US2009/0220832 propose une pile à combustible comportant un réservoir tampon d'hydrogène, une boucle de recirculation à la cathode et des vannes et clapets pour isoler les circuits internes de la pile de l'air atmosphérique. Il ressort de cette demande l'importance de prévenir la pénurie d'hydrogène lors de l'extinction et pendant la période de repos qui s'en suit afin d'éviter l'oxydation des électrodes sur le long terme. Cependant, la procédure d'extinction décrite implique transitoirement des mélanges d'hydrogène et d'oxygène, ce qui compromet la sécurité. D'autre part l'agencement des éléments proposé et la procédure décrite visent à inonder les circuits de la pile avec de l'hydrogène quasi pur plutôt qu'un mélange d'azote et d'hydrogène, ce qui n'est ni sûr ni économique.

Le document US 2007/193340 A1 constitue également une référence de l'art antérieur.

L'objectif de la présente invention est de parvenir à maintenir une pile à combustible dans des conditions évitant sa dégradation à l'arrêt et aussi de parvenir à un processus d'un arrêt maîtrisé et rapide de la pile à combustible, c'est à dire à un arrêt des processus électrochimiques internes de façon à garantir qu'un mélange d'hydrogène et d'azote reste présent dans la pile à combustible après son extinction et cela sans fortement complexifier l'installation ni compromettre la sécurité.

*BREVE DESCRIPTION DE L'INVENTION*

L'invention est définie dans les revendications. L'invention propose une pile à combustible formée par un empilage de cellules électrochimiques ayant chacune une anode et une cathode de part et d'autre d'une membrane polymère échangeuse d'ion, un système d'alimentation en gaz carburant côté anode des cellules électrochimiques et un système d'alimentation en gaz comburant côté cathode des cellules électrochimiques, le système d'alimentation en gaz carburant comportant une vanne de coupure pour un raccordement à un réservoir de stockage du gaz carburant, un canal d'alimentation aux anodes, et une boucle de recyclage du gaz carburant.

L'invention concerne une pile à combustible dont le système d'alimentation en gaz comburant de la pile à combustible comporte un canal d'alimentation en gaz comburant aux cathodes et une boucle de recyclage du gaz comburant. La présente invention s'applique aussi bien à une pile à combustible conçue pour fonctionner à l'oxygène pur ou en gaz très riche en oxygène, qu'à une pile à combustible conçue pour fonctionner à l'air atmosphérique comme gaz comburant et, même dans ce cas, la pile à combustible selon l'invention comporte une telle boucle de recyclage du gaz comburant.

L'invention propose une pile à combustible formée par un empilage de cellules électrochimiques ayant chacune une anode et une cathode de part et d'autre d'une membrane polymère échangeuse d'ion, un système d'alimentation en gaz carburant côté anode des cellules électrochimiques et un système d'alimentation en gaz comburant côté cathode des cellules électrochimiques, le système d'alimentation en gaz carburant et comburant comportant :

- une vanne de coupure pour un raccordement à un réservoir de stockage du gaz carburant, et une vanne de régulation de pression dudit gaz carburant,
- un canal d'alimentation aux anodes, et
- une boucle de recyclage du gaz carburant, aboutissant sur le canal d'alimentation en aval de la vanne de régulation de pression dudit gaz carburant,
- un canal d'alimentation en gaz comburant aux cathodes,
- une boucle de recyclage du gaz comburant,
- un dispositif de remplissage en air atmosphérique pressurisé,
- des moyens d'isolation de l'air atmosphérique permettant d'isoler le canal d'alimentation aux cathodes et ladite boucle de recyclage de l'air atmosphérique,

la pile à combustible étant caractérisée en ce que le système d'alimentation en gaz comburant comporte un réservoir tampon pour accumuler ledit gaz carburant, branché au réseau de canaux d'alimentation du gaz carburant, en aval de la vanne de coupure et en amont de la vanne de régulation de pression.

Ainsi, la disposition proposée pour la pile à combustible selon l'invention permet une décharge finement contrôlée du contenu du réservoir tampon de gaz carburant. La chambre d'accumulation additionnelle pour le gaz carburant est placée là où la pression est la plus élevée dans le circuit d'alimentation, de façon à en amoindrir le volume, ou à volume identique, de façon à stoker une plus grande quantité d'hydrogène.

Suivant un aspect de l'invention, le système d'alimentation comporte un dispositif de remplissage en air atmosphérique pressurisé. On entend par là que, dans tous les modes de réalisation de l'invention, c'est-à-dire aussi bien pour une pile à combustible conçue pour fonctionner à l'oxygène pur ou en gaz très riche en oxygène qu'une pile à combustible conçue pour fonctionner à l'air atmosphérique comme gaz comburant, l'air atmosphérique est comprimé avant d'être acheminé au canal d'alimentation en gaz comburant aboutissant aux cathodes.

Le dispositif de remplissage en air atmosphérique pressurisé comporte par exemple les principaux éléments suivants : une canalisation débutant par un orifice d'admission d'air et, installés sur ladite canalisation, une vanne de coupure et une pompe de gavage ou compresseur, la canalisation aboutissant sur le circuit d'alimentation en gaz comburant lui-même aboutissant à la pile à combustible 1.

Suivant un autre aspect de l'invention, il est toujours prévu des moyens d'isolation de l'air atmosphérique permettant d'isoler le canal d'alimentation aux cathodes et ladite boucle de recyclage de l'air atmosphérique. Ces moyens d'isolation de l'air atmosphérique comprennent au moins une vanne d'isolation isolant ledit dispositif de remplissage de l'air atmosphérique. Ces moyens d'isolation de l'air atmosphérique, d'une façon plus générale, sont matérialisés par des vannes ou des clapets anti-retour qui doivent être placés en amont et en aval du circuit cathodique de façon à isoler le circuit cathodique vis à vis du milieu ambiant, c'est-à-dire en général de l'air atmosphérique.

Suivant encore un autre aspect de l'invention, le système d'alimentation en gaz comburant comporte en outre un raccordement du canal d'alimentation à un réservoir de stockage d'oxygène ou à un système d'alimentation en air atmosphérique pressurisé ou non et, sur ledit raccordement, une vanne de coupure faisant partie des moyens d'isolation de l'air atmosphérique.

En ce qui concerne l'électrolyte, l'invention s'applique aux piles à combustible du type à électrolyte sous la forme d'une membrane polymère (c'est à dire de type PEFC pour Polymer Electrolyte Fuel Cell). La sous-alimentation en hydrogène est un problème auquel les piles à combustible de type PEFC sont assez sensibles. Et l'alimentation de la pile à combustible en oxygène pur plutôt qu'en air atmosphérique présente quelques avantages, notamment une réponse plus dynamique de la pile à combustible à une demande de courant, ce qui est intéressant en particulier pour les applications aux engins de transport comme les automobiles dont on sait qu'elles imposent des conditions de fonctionnement particulièrement intermittentes, contrairement aux applications stationnaires. La pile à combustible et la procédure d'arrêt décrites ci-dessous s'avèrent particulièrement aptes à être installés et mis en oeuvre dans un véhicule automobile.

*BREVE DESCRIPTION DES FIGURES*

La suite de la description permet de bien faire comprendre tous les aspects de l'invention au moyen des dessins joints dans lesquels :

- la figure 1 est un schéma d'une pile à combustible selon l'invention, alimentée en oxygène pur ;
- la figure 2 est un schéma d'une pile à combustible selon l'invention, alimentée en air ambiant ;
- les figures 3 et 4 montrent l'évolution de différents paramètres au cours de l'extinction d'une pile à combustible selon l'invention ;
- la figure 5 montre un organigramme de la procédure d'arrêt d'une pile à combustible selon l'invention ;
- La figure 6 est une vue en coupe de l'implantation d'un des capteurs pénétrant dans l'enceinte de la pile à combustible à travers la paroi d'une plaque d'extrémité du réacteur électrochimique.

*DESCRIPTION DE MEILLEURS MODES DE REALISATION DE L'INVENTION*

Pour des raisons de sécurité, les piles à combustible sont en général équipées d'une vanne de coupure en H2 qui reste fermée lors des arrêts. Dans ce cas, il n'est pas possible de prélever l'H2 dans le réservoir pendant la procédure d'extinction. La procédure d'arrêt doit donc être réalisée avec uniquement l'hydrogène résiduel dans les canaux, les tubulures, les réservoirs internes de déshumidification et autres éléments de la ligne d'alimentation allant de la vanne de sécurité jusque la pile à combustible proprement dite, ces éléments étant désignés dans la suite en général comme le circuit d'alimentation de la pile à combustible.

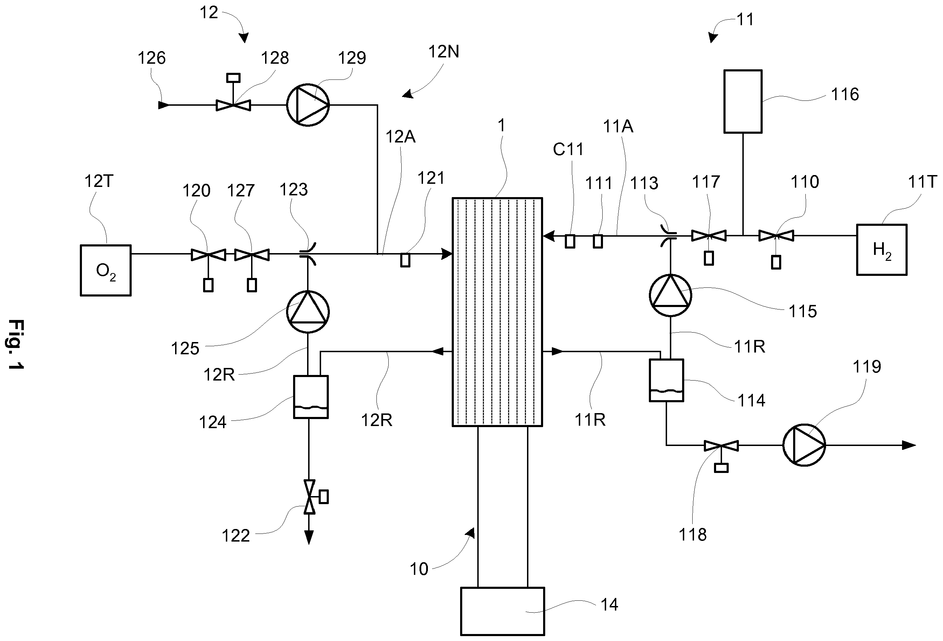

A la figure 1, on voit une pile à combustible 1 du type à électrolyte sous la forme d'une membrane polymère (c'est à dire de type PEFC pour Polymer Electrolyte Fuel Cell ou PEM pour Proton Exchange Membrane). La pile à combustible 1 est approvisionnée par deux gaz, à savoir le carburant (l'hydrogène stocké ou fabriqué à bord du véhicule) et le comburant (l'oxygène pur) qui alimentent les électrodes des cellules électrochimiques. Une charge électrique 14 est branchée à la pile à combustible 1 par une ligne électrique 10. Pour simplifier, la figure 1 ne représente que les éléments des circuits de gaz utiles à la compréhension de l'invention.

*Description du circuit anodique :*

L'installation comporte un circuit d'alimentation 11 en gaz carburant coté anodes. On voit un réservoir 11T d'hydrogène pur H$_2$ relié à l'entrée du circuit anodique de la pile à combustible 1 au moyen d'une canalisation d'alimentation qui passe par une vanne de coupure 110, puis par une vanne de régulation de pression 117, puis par un éjecteur 113, puis par un canal d'alimentation 11A en gaz carburant aboutissant aux anodes. Une sonde de pression 111 est installée sur le canal d'alimentation 11A juste avant l'entrée dans la pile à combustible 1. Fait partie du circuit d'alimentation 11 en hydrogène (le carburant) un circuit de recyclage 11R de l'hydrogène non consommé par la pile à combustible, branché à la sortie du circuit anodique de la pile à combustible 1. Un séparateur d'eau 114 est installé sur le circuit de recyclage 11R. L'éjecteur 113 ainsi qu'une pompe de re-circulation 115 assurent le recyclage de l'hydrogène non consommé et le mélange à l'hydrogène frais en provenance du réservoir.

On voit aussi une chambre d'accumulation additionnelle de gaz carburant 116 disposée sur la tuyauterie du circuit d'alimentation 11 en gaz carburant, entre la vanne de coupure 110 et une vanne de régulation de pression 117. La chambre d'accumulation additionnelle est placée là où la pression est la plus élevée dans le circuit d'alimentation, de façon à en amoindrir le volume, ou à volume identique, de façon à stoker une plus grande quantité d'hydrogène. D'autre part, la position en amont de la vanne de régulation de pression rend possible une décharge contrôlée de ladite chambre d'accumulation.

On voit également une pompe d'aspiration 119 et une vanne de coupure 118 installés sur une canalisation aboutissant à l'atmosphère et branchée sur la boucle de recyclage 11R du gaz carburant, de préférence sous le séparateur d'eau 114. Le branchement à cet endroit précis, montré à la figure 1, permet en commandant la vanne de coupure 118 d'assurer la triple fonction d'évacuation de l'eau, de purge, et d'aspiration de l'hydrogène. Cependant, ce détail de réalisation n'est pas limitatif. Pour assurer la fonction d'aspiration de l'hydrogène plus spécifique de la présente invention, la canalisation comportant la vanne de coupure 118 pourrait être branchée à n'importe quel endroit en aval de la vanne de régulation de pression 117.

*Description du circuit cathodique :*

L'installation comporte aussi un circuit d'alimentation 12 en gaz comburant coté cathodes. On voit un réservoir 12T d'oxygène pur O$_2$ relié à l'entrée du circuit cathodique de la pile à combustible 1 au moyen d'une canalisation d'alimentation qui passe par une vanne de coupure 120, puis par une vanne de régulation de pression 127, puis par un éjecteur 123, puis par un canal d'alimentation 12A en gaz comburant aboutissant aux cathodes. Une sonde de pression 121 est installée sur le canal d'alimentation 12A juste avant l'entrée dans la pile à combustible 1. Fait partie du circuit d'alimentation 12 en oxygène un circuit de recyclage 12R de l'oxygène non consommé par la pile à combustible, branché à la sortie du circuit cathodique de la pile à combustible 1. Un séparateur d'eau 124 est installé sur le circuit de recyclage 12R. L'éjecteur 123 ainsi qu'une pompe de recirculation 125 assurent le recyclage de l'oxygène non consommé et le mélange à l'oxygène frais en provenance du réservoir.

Une vanne de purge 122 est raccordée au fond du séparateur d'eau 124 ; ainsi, elle assure la double fonction d'évacuation de l'eau et de mise à l'atmosphère du circuit d'oxygène. En variante, on pourrait raccorder cette vanne de purge 122 juste à la sortie des gaz de la pile à combustible 1, en dérivation sur la canalisation entre la pile à combustible 1 et le séparateur d'eau 124, si l'on souhaite mettre à l'atmosphère le circuit d'oxygène indépendamment d'une vidange de l'eau dans le séparateur d'eau 124. Il va sans dire que, dans tous les cas, la fonction de vidange d'eau du séparateur d'eau 124 et du séparateur d'eau 114 doit être assurée.

La pile à combustible selon l'invention comporte un dispositif de remplissage 12N en air atmosphérique pressurisé du circuit cathodique. Le dispositif de remplissage 12N comporte les éléments suivants : une canalisation débutant par un orifice d'admission d'air 126 et, installés sur ladite canalisation, une vanne de coupure 128 et une pompe de gavage 129, la canalisation aboutissant sur le circuit d'alimentation en oxygène, juste en amont de la pile à combustible 1. Soulignons que le dispositif de remplissage 12N en air atmosphérique pourrait aboutir à n'importe quel endroit de la boucle du circuit d'alimentation 12 en gaz comburant formée par le circuit de recyclage 12R et par la canalisation reliant l'éjecteur 123 à la pile à combustible 1.

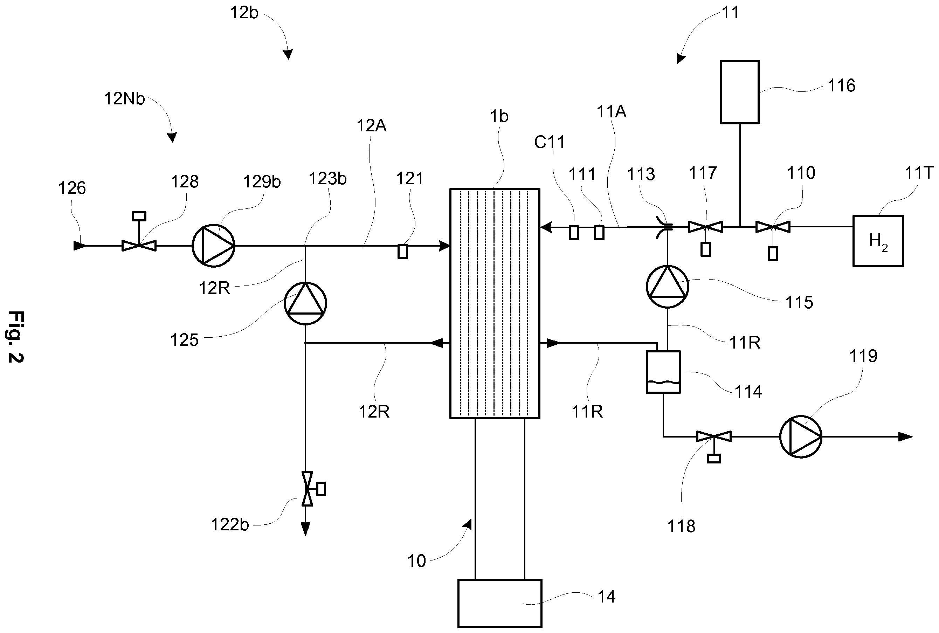

A la figure 2, on voit une pile à combustible 1b différente de celle de la figure 1 en ce que le gaz comburant est cette fois l'air atmosphérique. Pour simplifier, la figure 2 ne représente que les éléments des circuits de gaz utiles à la compréhension de l'invention. Le système d'alimentation en gaz carburant est identique à celui de la figure 1 ; de ce fait, il n'est pas utile d'en reprendre la description et les références utilisées sont communes avec celles de la figure 1.

En ce qui concerne le circuit d'alimentation 12b en gaz comburant coté cathodes, une première différence notable est l'absence de raccordement à un réservoir d'oxygène sous pression. On voit un dispositif de remplissage 12Nb en air atmosphérique pressurisé très proche de celui 12N de la figure 1. Ce dispositif comporte un compresseur d'air 129b qui, accessoirement, dans le contexte de l'invention, est utilisé comme pompe de gavage (comme la pompe de gavage 129 de la figure 1) servant en usage normal à alimenter la pile à combustible en air atmosphérique. Dans le contexte de cette invention, ce compresseur 129b est utilisé en tant que pompe de gavage. On suppose ici que le compresseur est capable d'assurer la double fonction d'alimentation en air de la pile à combustible pendant le fonctionnement normal et de gavage en air pressurisé pendant l'extinction. Notons que si le compresseur d'air ne peut pas assurer la fonction de pompe de gavage pour des raisons par exemple d'incompatibilité de niveau de pression, il y aurait alors la présence d'une deuxième ligne de remplissage en air pressurisé utilisé uniquement lors de l'extinction. Une autre différence est que le circuit de recyclage 12R de l'air non consommé par la pile à combustible est directement branché au canal d'alimentation 12A sans passer par un éjecteur, par un simple branchement 123b en dérivation en aval du dispositif de remplissage 12N en air atmosphérique pressurisé. Une autre différence est que le circuit de recyclage 12R ne comporte pas de séparateur d'eau. On voit une vanne de régulation de pression 122b permettant de contrôler la perte de charge en sortie de la pile à combustible, ce qui permet d'avoir la pression souhaitée dans la pile à combustible. Cette vanne de régulation de pression 122b permet, en association avec la vanne de fermeture 128, d'isoler le circuit comburant de l'air atmosphérique pendant et après l'extinction.

*Description de la procédure d'extinction :*

La procédure décrite ci-dessous permet d'éteindre la pile à combustible de façon à garantir un stockage avec un mélange d'hydrogène et d'azote à l'intérieur, et cela, sans nécessiter de réservoir d'azote.

La procédure d'arrêt est composée essentiellement de 3 phases, résultats des différentes commandes qui ont été exposées :

- 1ère phase : phase de consommation de l'oxygène résiduel, qui se produit à partir de la coupure de l'alimentation en gaz carburant et en gaz comburant, et par un prélèvement de courant $I_S$ aux bornes de la pile à combustible ; on maintient ce prélèvement de courant $I_S$ tant qu'un révélateur approprié indique que le gaz comburant dans le système d'alimentation en gaz comburant n'est pas suffisamment consommé ; un révélateur approprié est par exemple la tension présente aux bornes de la pile à combustible ;

- 2ème phase : phase de neutralisation, qui se produit en remplissant le circuit cathodique d'azote ; dans le mode de réalisation décrit ici, l'azote est celui de l'air atmosphérique ; on procède donc à une injection forcée d'air atmosphérique, ce qui apporte à nouveau un peu d'oxygène dont il faut contrôler la consommation par prélèvement de courant;

- 3ème phase, optionnelle, pendant laquelle, après l'arrêt total des processus électrochimiques, on retire de façon forcée un éventuel excès de gaz carburant (ici, aspiration forcée de l'hydrogène excédentaire) ;

soulignons que, grâce à l'invention, cette aspiration ne se fait qu'après avoir amené la pile à combustible dans un état où l'on a pris les précautions permettant d'éviter la sous alimentation en hydrogène dont on connaît les graves inconvénients.

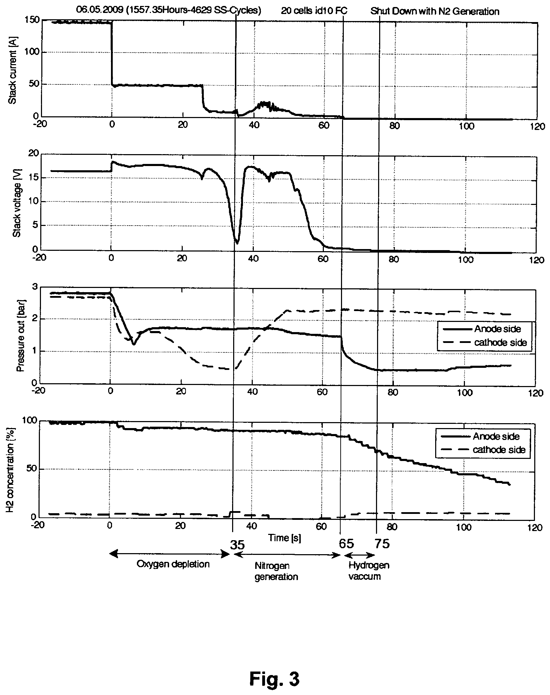

La figure 3 illustre l'enchaînement des trois phases lors d'un arrêt réellement mesuré sur une pile à combustible de 20 cellules de 300cm2 de surface active fonctionnant à l'oxygène pur. L'axe des abscisses indique le temps en secondes avec comme référence (0) l'instant où la procédure d'arrêt commence. Cette figure représente l'évolution des grandeurs suivantes en fonction du temps lors d'un arrêt avec génération d'azote :

- courbe 1, dont l'axe des ordonnées est repéré par « Stack current [A] » :

    courant prélevé sur la pile à combustible, exprimé en Ampères ;

- courbe 2, dont l'axe des ordonnées est repéré par « Stack voltage [V] » :

    tension électrique totale aux bornes de la pile à combustible, exprimée en Volts ;

- courbe 3, dont l'axe des ordonnées est repéré par « Pressure out [bar] » :

    pression régnant dans le compartiment anode (hydrogène : trait continu) et dans le compartiment cathode (oxygène : trait pointillé), exprimées en bara ;

- courbe 4, dont l'axe des ordonnées est repéré par « H2 concentration [%] » :

    concentration d'hydrogène dans le compartiment anode (hydrogène : trait continu) et dans le compartiment cathode (oxygène : trait pointillé), exprimées en pourcentage volumique.

Lors de la première phase de l'extinction (0 à 35s, marquée « Oxygen depletion » à la figure 2), à partir du moment où l'alimentation en oxygène est coupée (en fermant la vanne de coupure 120, au même instant que la fermeture de la vanne de coupure 110 coupant l'alimentation en hydrogène), l'oxygène pur résiduel dans la pile à combustible est d'abord partiellement évacué à l'atmosphère par l'ouverture momentanée de la vanne de purge 122, puis le restant est consommé en prélevant un courant $I_S$. La vanne de purge 122 reste fermée pendant le reste de la procédure d'extinction et également pendant le repos de façon à éviter la pénétration d'air à la cathode.

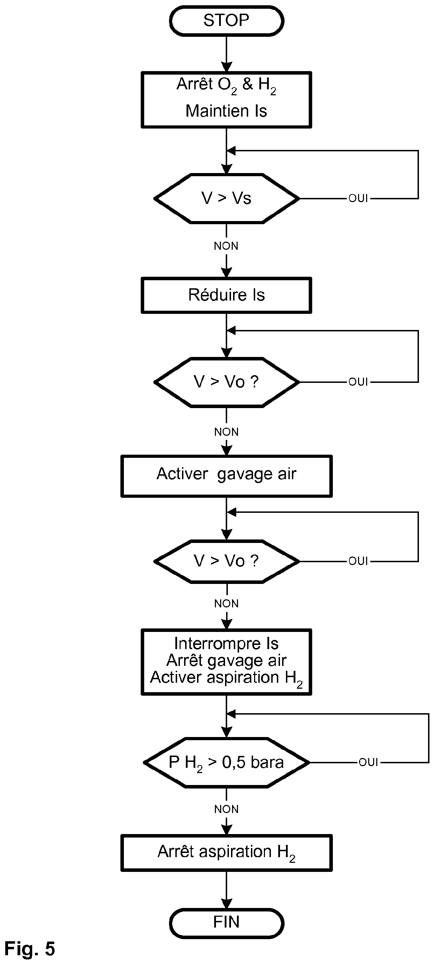

La figure 5 schématise les commandes essentielles de la procédure d'arrêt selon l'invention. On voit que, à partir d'un ordre d'arrêt de la pile à combustible (instruction STOP), un automate de commande de la pile à combustible procède au départ du processus d'arrêt en coupant l'alimentation des gaz, c'est-à-dire en fermant, par exemple simultanément, les vannes de coupure 110 et 120 ainsi que la vanne de coupure 128 (pour la pile à combustible illustrée à la figure 1) ou en fermant, par exemple simultanément, les vannes de coupure 110 et 128 (pour la pile à combustible illustrée à la figure 2).

Comme l'indique la première courbe, ce courant $I_S$ est d'abord établi à 50A. A partir du moment où la tension V de la pile à combustible est inférieure à une valeur de seuil $V_S$ choisie expérimentalement (environ après 25 secondes), l'automate procède à la réduction progressive du courant $I_S$ en même temps la pile à combustible commencent à descendre en tension.

La troisième courbe de la figure 3 indique que la pression dans le compartiment oxygène descend à moins de 500 mbara (comme cela est d'usage dans le domaine des piles à combustible, « mbara » signifie « milli bar absolu, la dernière lettre « a » signifiant « absolu »). Par contre, en dépit de la consommation liée à la production de courant, la pression d'hydrogène demeure à 1.75 bara grâce à la présence de la chambre d'accumulation additionnelle de gaz carburant 116.

A l'instant 35s (« 35 » sur l'axe des temps à la figure 3), la vanne de coupure 128 est ouverte en même temps que la pompe de gavage 129 en air est activée pour pressuriser le circuit cathodique à une pression de 2.2 bara (paramètre 1) qui est atteinte à 50s. Cet enchaînement est schématisé à la figure 5 où l'on voit que, dès que la tension de la pile à combustible n'est plus supérieure à $V_0$ (2 Volts), l'automate, envoie un ordre « Activer gavage air ». L'oxygène ainsi amené par l'air provoque la remontée en tension de la pile à combustible. Un courant continu à être prélevé (on voit à la figure 3 que l'intensité du courant prélevé s'élève quelque peu, concomitamment à l'élévation de tension) jusqu'à ce que la tension de la pile à combustible s'annule à nouveau.

La procédure d'arrêt est avantageusement pilotée de façon à ce que le prélèvement de courant est d'abord établi à un premier niveau puis il est réduit en même temps que certaines cellules de la pile à combustible commencent à descendre en tension et s'annule finalement lorsque la tension de la pile à combustible approche de 0V. A cette fin, il convient donc d'équiper la pile à combustible des capteurs et branchements électriques nécessaire au suivi individuel de la tension des cellules composant l'empilage, au moins de certaines cellules de la pile à combustible.

Cet enchaînement est schématisé à la figure 5 où l'on voit que, dès que et tant que la tension de la pile à combustible est à nouveau supérieure à 2 ($V_0$ valant approximativement 2Volt), l'automate maintient le prélèvement d'un courant $I_S$ et, grâce aux signaux délivrés par la sonde de pression 121 et grâce à des circuits appropriés, l'automate contrôle le fonctionnement de la pompe de gavage 129 en air pour maintenir une pression sensiblement constante dans le circuit d'alimentation en gaz comburant.

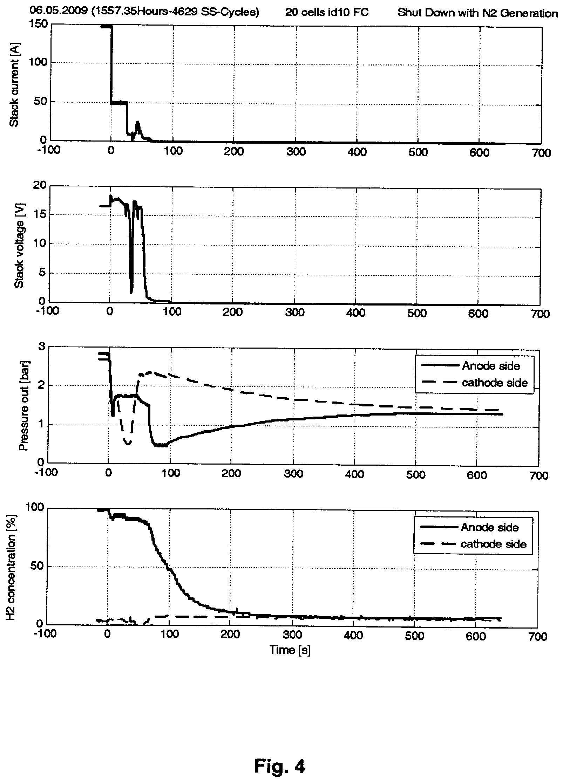

Au passage, rappelons que toutes les courbes détaillées ci-dessous et montrées aux figures 3 et 4 sont relatives à la procédure d'arrêt d'une pile à combustible alimentée en oxygène pur comme comburant, le gaz enrichi en azote étant l'air atmosphérique. Cependant, soulignons d'une part que le gaz enrichi en azote pourrait être de l'azote pur et que bien entendu, dans ce cas, les courbes auraient une allure différente après l'instant « 35 secondes » puisque l'injection d'azote ne serait pas accompagnée d'un nouvel apport d'oxygène.

Revenons au cas décrit, à savoir le cas d'une pile à combustible alimentée en oxygène pur comme comburant. A mesure que le courant est consommé, l'air présent à la cathode s'appauvrit de plus en plus en oxygène pour finalement ne contenir que majoritairement de l'azote comme révélé par l'annulation de la tension aux bornes de la pile à combustible à l'instant 65 secondes.

A ce moment (65 secondes après la coupure des alimentations en oxygène et en hydrogène), la pompe de gavage 129 en air est arrêtée et la pompe d'aspiration 119 d'hydrogène est activée en même temps que la vanne de coupure 118 est ouverte afin d'évacuer l'excédent d'hydrogène. La pompe d'aspiration 119 est activée jusqu'à ce que la pression d'hydrogène atteigne 0.5 bara (paramètre 2). Cette pression est atteinte à l'instant 75 secondes.

Cet enchaînement est schématisé à la figure 5 où l'on voit que, dès que la tension de la pile à combustible n'est plus supérieure à 2V, l'automate envoie un ordre « arrêt gavage air », « Interrompre $I_S$ » et « Activer aspiration H2 » tandis que la pression est suivie grâce aux signaux délivrés par la sonde de pression 111 et, à partir du moment où la pression du circuit anodique de la pile à combustible n'est plus supérieure à 0.5 bara, l'automate envoie un ordre « arrêt aspiration $H_2$ ».

La procédure est alors terminée, la pompe de gavage 129 et la pompe d'aspiration 119 sont arrêtées et les vannes de coupure 118 et 128 sont fermées de façon à ce que les circuits anodiques et cathodiques soient isolés de l'air ambiant.

Pendant la totalité de la procédure d'extinction, la pompe de recirculation 125 coté cathode est maintenue en fonctionnement de façon à assurer une bonne homogénéité du gaz et assurer la consommation complète de l'oxygène en évitant l'apparition de zones avec localement une plus forte concentration en oxygène. La pompe de recirculation 115 coté anode est aussi maintenue en fonctionnement de façon à éviter toute pénurie locale d'hydrogène. Pendant toute la durée de l'extinction, la pénurie d'hydrogène est évitée comme l'indique la concentration d'hydrogène représentée sur la quatrième courbe. La concentration reste supérieure à 85% dans le circuit anodique jusqu'à l'instant 65s où l'on commence l'aspiration d'hydrogène.

Comme l'indique la figure 4 représentant le même arrêt, selon une autre échelle de temps permettant de suivre les paramètres sur une durée plus longue, au terme de la procédure d'arrêt et après équilibrage des pressions et concentrations par perméation naturelle à travers les membranes, la concentration d'hydrogène s'établit à environ 10% de part et d'autre de la membrane. Par déduction, les 2 compartiments de la pile à combustible sont donc finalement remplis d'un mélange à 10% hydrogène et à 90% d'azote, ce qui garantit une phase de repos de la pile à combustible dans de bonnes conditions pour sa durabilité dans de bonnes conditions de sécurité.

Il faut également noter que les pressions s'équilibrent vers 1.5 bara, ce qui garantit une légère surpression par rapport à la pression atmosphérique, même après refroidissement, de façon à minimiser la lente pénétration d'air à l'intérieur de la pile à combustible. Les concentrations et pressions finales indiquées ci-dessus résultent du réglage des deux paramètres : pression de remplissage en air de la cathode et pression finale d'aspiration de l'hydrogène. D'autres réglages de ces deux paramètres sont bien entendu possibles.

Dans la procédure décrite plus haut, les deux premières phases (Consommation de l'oxygène résiduel et injection d'azote) interviennent de façon successive. Toutefois, elles peuvent tout à fait être concomitantes. Pour une plus grande rapidité d'extinction, il est souhaitable de les faire intervenir simultanément. La dernière phase (aspiration de l'hydrogène excédentaire) n'est pas toujours indispensable. Le tampon d'hydrogène peut en effet être dimensionné pour que la procédure se termine avec la quantité d'hydrogène souhaitée comme expliqué ci-dessous.

Le volume interne du circuit d'alimentation 11 en gaz carburant est dimensionné de façon à être supérieur au volume interne du circuit d'alimentation 12 en gaz comburant et, en fonctionnement normal, la pression régnant dans le circuit d'alimentation 12 en gaz comburant et la pression régnant dans le circuit d'alimentation en gaz carburant 11 sont telles que, compte tenu du volume interne du circuit d'alimentation 12 en gaz comburant et du volume interne du circuit d'alimentation 11 en gaz carburant, le nombre de môles de gaz carburant toujours disponible au début du processus d'extinction dans le circuit d'alimentation en gaz carburant est supérieur ou égal au double du nombre de môles d'oxygène consommé dans le circuit d'alimentation en gaz comburant pendant la totalité de la procédure d'extinction, c'est à dire jusqu'à ce que le circuit cathodique soit essentiellement rempli d'azote à la pression souhaitée.

Ainsi, par une adaptation simple à calculer et à mettre en oeuvre, on peut s'assurer que le circuit d'alimentation en gaz carburant comporte toujours suffisamment de gaz pour que l'extinction de la pile à combustible résulte de l'épuisement en oxygène au circuit d'alimentation en gaz comburant.

Voyons comment procéder au calcul des volumes des circuits anodique 12 et cathodique 11. Soit $m_{o2}$ la quantité d'oxygène, exprimé par exemple en moles, devant être totalement consommée pendant la totalité de l'extinction. Il s'agit de l'oxygène résiduel dans le circuit cathode au début de l'extinction, moins la quantité qu'il est possible de purger, plus la quantité qui est introduite avec l'air introduit par la pompe de gavage 129 pour générer l'azote.

Puisque la consommation de gaz est deux fois plus importante coté hydrogène, les volumes des circuits anode et cathode doivent être dimensionnés pour garantir que :

$$m_{h2} \geq 2 \text{ x } m_{o2} + \text{res}_{h2}$$

avec $m_{h2}$ étant la quantité d'hydrogène, exprimée en moles, disponible au début de l'extinction dans le volume interne du circuit d'alimentation en gaz carburant (tuyaux, canaux, plaques bipolaires, ligne d'alimentation en aval de la vanne de coupure 110) et $\text{res}_{h2}$ étant la quantité d'hydrogène résiduel souhaité, exprimé également en moles. La quantité d'hydrogène $m_{h2}$ finalement nécessaire sera obtenu en ajustant le volume de la chambre d'accumulation additionnelle de gaz carburant 116.

Les quantités $m_{o2}$ et $m_{h2}$ sont certes liées au volume des circuits correspondants qu'il faut dimensionner mais elles dépendent aussi de la pression y régnant. Il s'agit d'une approche simplifiée puisqu'il faudrait normalement aussi tenir compte de la température du gaz et de la non-linéarité de la densité d'hydrogène en fonction de la pression. Cependant la prise en compte de la pression s'avère suffisante pour la précision recherchée. Le calcul des volumes doit être réalisé pour les conditions de pression et de température les plus défavorables pouvant être rencontrées, c'est à dire pression minimum possible dans le circuit d'hydrogène au début de l'extinction et pression maximum résiduel possible dans le circuit d'oxygène.

Toutefois en cas de variation de pression d'alimentation, le déroulement de la procédure avec un excédent d'hydrogène et une aspiration finale garantit la non pénurie d'hydrogène et également une meilleure reproductibilité des conditions finales.

On remarque que selon cette invention, l'azote résulte de l'appauvrissement de l'air dont le contenu en oxygène a réagi dans la pile à combustible selon la réaction normale de production de courant sans dégagement anormale de chaleur ni de risque de dégradation des éléments catalytiques (par opposition au brevet US 6,939,633).

A la fin (75 secondes après la coupure des alimentations en oxygène (120) et en hydrogène (110)) de la procédure d'arrêt, il subsiste une différence de pression entre l'anode et la cathode, dans l'exemple ci-dessus 2.2 bara à la cathode et 0.5 bara à l'anode. Le temps nécessaire pour que les pressions s'équilibrent peut avantageusement donner une indication de la perméabilité des membranes. La perméabilité des membranes est en effet un paramètre très révélateur de l'état de santé d'une pile à combustible. En outre, l'apparition non détectée de trous dans les membranes compromet également la sécurité. Dès lors, la surveillance permanente de leur perméabilité est également utile pour la sécurité.

Par exemple, après chaque arrêt, dès que la différence de pression tombe à 500mbar, l'unité de commande de la pile à combustible mesure la variation de pression dans les 60 secondes qui suivent. La valeur obtenue évolue avec le vieillissement de la pile à combustible et constitue un excellent indicateur.

Si le principe de mesure de la perméabilité par différence de pression est classique, il nécessite cependant une procédure manuelle et un appareillage dédiés (une bouteille d'azote externe par exemple). Par contraste, la procédure décrite offre la possibilité de pouvoir mesurer la perméabilité de façon automatique, après chaque extinction, ce qui est un avantage considérable pour le suivi et le diagnostic d'une pile à combustible.

Ainsi, une procédure de détection de l'état de perméabilité de la membrane polymère échangeuse d'ions d'une pile à combustible, peut être mise en place. Dans ce contexte, on connaît déjà, par la demande de brevet US 2004/124843, une méthode pour évaluer la perméabilité individuelle de chaque membrane échangeuse d'ions d'une pile à combustible. Pour cela, l'anode est alimentée en hydrogène ; la cathode est alimentée en azote ou en un autre gaz neutre. Selon l'équation de Nernst's, la différence de nature de gaz de part et d'autre de la membrane génère une différence de potentiel dépendant entre autre de la nature et de la concentration ou pression partielle de ces gaz. Il apparaît que si une membrane est particulièrement perméable, l'hydrogène va diffuser côté cathode et inversement, modifiant ainsi la nature du mélange gazeux de part et d'autre de la membrane et par conséquent modifiant aussi la différence de potentielle mesurée sur cette cellule. Cette méthode procède à une mesure de tension et procède à une mesure de la pression régnant dans le circuit anodique et de la pression régnant dans le circuit cathodique et procède à une mesure de température pour résoudre l'équation de Nernst's, afin de déceler si une ou plusieurs membranes montées au sein d'une pile à combustible présentent un défaut de perméabilité.

Cependant, cette méthode présente les difficultés de mise en oeuvre suivantes :

-   la différence de potentielle théorique avec de l'hydrogène pur à l'anode et de l'azote pur à la cathode est au maximum de quelques dizaines de mV, ce qui implique un appareillage de mesure de tension très précis ;
-   l'évaluation de la perméabilité implique des mesures de débit, ce qui en pratique est difficilement réalisable avec une grande précision pour les mélanges gazeux ;
-   la moindre trace d'oxygène résiduel à la cathode peut générer une différence de tension bien supérieure au niveau de tension attendu et donc fausser la mesure ; or il est bien connu qu'en pratique, il est très difficile de garantir la disparition totale d'un gaz surtout en présence d'un support absorbant comme l'élément de diffusion des gaz (désigné en général par GDL pour « gas diffusion layer ») contenu dans les assemblages de membranes et électrodes (MEA) ;

- enfin cette méthode implique une mise en condition particulière du système et la disponibilité d'une source d'azote ou autre gaz neutre ; elle est donc difficilement automatisable, surtout dans le cadre d'applications embarquées.

La procédure de détection de l'état de perméabilité de la membrane polymère échangeuse d'ions d'une pile à combustible, formée par un empilage de cellules électrochimiques ayant chacune une anode et une cathode de part et d'autre d'une membrane polymère échangeuse d'ion, la pile à combustible ayant un système d'alimentation en gaz carburant côté anode des cellules électrochimiques et un système d'alimentation en gaz comburant côté cathode des cellules électrochimiques, consiste à, après chaque arrêt de la pile à combustible, mesurer la dynamique avec laquelle la pression régnant dans le circuit anodique et la pression régnant dans le circuit cathodique s'équilibrent, et dès que la différence de pression dans les circuits anodique et cathodique tombe à une valeur inférieure à une valeur de seuil $P_S$, mesurer la variation de pression dans lesdits circuits pendant une période de temps prédéterminée $t_C$, mémoriser la valeur de la différence de pression dans ces circuits au bout d'une période de temps prédéterminée, appelée valeur pression de contrôle $P_C$ et donner une alerte lorsque la pression de contrôle $P_C$ est inférieure à un seuil d'alerte $P_A$.

Si l'on se reporte à la figure 4, et plus particulièrement à la courbe donnant l'évolution des pressions côté anode et côté cathode, l'écart entre ces courbes donne directement la mesure de la différence de pression entre ces deux circuits. On voit qu'une valeur de seuil $P_S$ de 500 mbar est atteinte environ au temps 300 secondes. Ensuite, on relève systématiquement, c'est-à-dire à chaque arrêt de la pile à combustible, la différence de pression au bout d'une période de temps supplémentaire $t_C$ valant par exemple 60 secondes, ce qui donne dans cet exemple, c'est-à-dire pour la pile à combustible utilisée pour relever les courbes des figures 3 et 4, une pression de contrôle $P_C$ valant 360 mbar, c'est-à-dire une chute de la différence de pression aux circuits anodique et cathodique valant 140 mbar. Il suffit donc d'établir un plan d'expérience permettant de corréler les valeurs de pression de contrôle $P_C$ valant au bout d'une période de temps prédéterminée $t_C$ aux dégradations de la membrane échangeuse d'ion, ce qui permet un suivi automatisé du vieillissement de la pile à combustible.

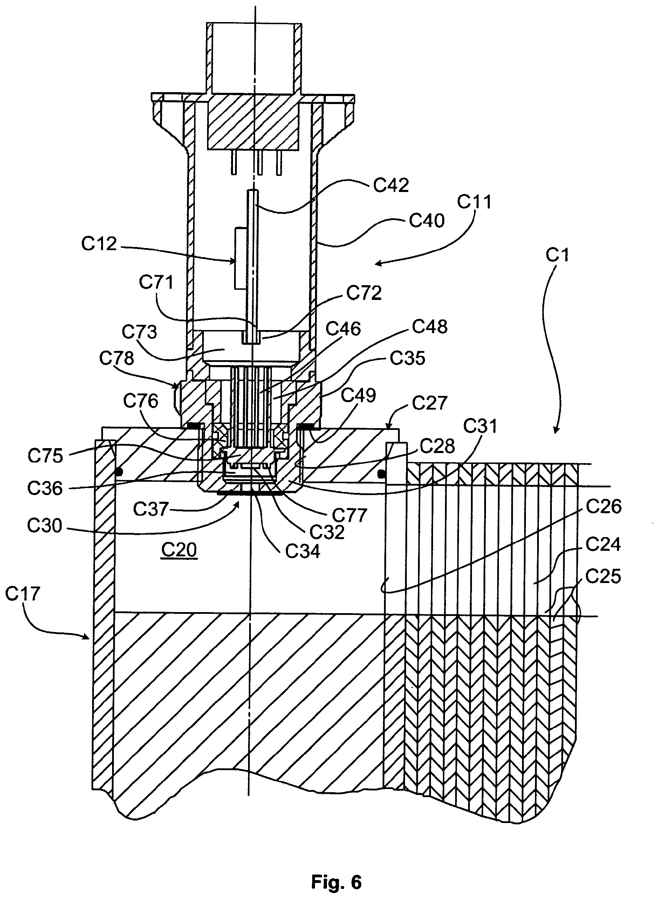

Un capteur de concentration d'hydrogène C11 est introduit dans le circuit anodique de façon à surveiller la non pénurie d'hydrogène pendant la procédure d'extinction, et le cas échéant, à limiter l'introduction d'air par la pompe de gavage, ce qui peut se produire par exemple si la pression hydrogène est anormalement basse et ne garantit pas la quantité suffisante d'hydrogène pour terminer la procédure d'extinction sans risque de pénurie d'hydrogène. Un tel capteur d'hydrogène C11 est implanté comme montré aux figures 1 et 2 et est décrit plus particulièrement ci-dessous et illustré au moyen de la figure 6.

En se reportant à la figure 6, on voit une chambre C20 d'admission de l'hydrogène aménagée dans une plaque d'extrémité C17 et adjacente à un empilage de cellules C25, sièges de la réaction électrochimique d'une pile à combustible C1. Les cellules adjacentes sont traversées par une tubulure C24 d'alimentation en gaz hydrogène qui prend sa source dans la chambre C20 par une entrée C26.

Un capteur de concentration d'hydrogène C11 basé sur la mesure de conductivité thermique est monté sur la face latérale supérieure C27 de la plaque système C17, plus précisément sur un perçage C28 traversé, à l'aide d'une étanchéité appropriée au gaz sous pression, réalisée par un joint C49, par un embout creux C31 à l'intérieur duquel est logée et protégée l'unité sensible C30 du capteur de concentration d'hydrogène C11. La tête de l'unité sensible C30 comprend une plaquette C32 de circuits sensibles qui est montée dans une chambre C36 ménagé à la partie inférieure de l'embout C31. La chambre C36 communique avec la chambre C20 dans la pile à combustible par un canal C34 percé dans la paroi d'extrémité de l'embout creux C31. La plaquette C32, dont une face est tournée vers le débouché du canal C34 dans la chambre C36, est en contact direct avec l'atmosphère de la chambre C20 par le canal C34. Conformément à un aspect important, un filtre C37 est placé sur l'arrivée du canal C34 dans la chambre C36 pour isoler la plaquette C32 de tout contact avec l'eau liquide qui pourrait être mélangée aux gaz de la chambre C20. Le filtre C37 est réalisé en un matériau qui est perméable aux gaz mais imperméable à l'eau liquide. On connaît par exemple le matériau tissé commercialement disponibles sous la marque « GORETEX » ® pour son aptitude à cet usage. Il est essentiellement constitué d'un tissu synthétique en fils de Téflon ®.

Du côté opposé à l'embout creux C31, le boîtier du capteur de concentration d'hydrogène C11 comporte un manchon cylindrique C48 qui fait saillie hors de la paroi latérale externe C27 de la plaque C17, à partir d'une collerette de butée creuse C35 fixée dans cette paroi C27, et est lui-même prolongé par une enveloppe tubulaire C40. L'unité de traitement C12 chargée de construire l'information de concentration d'hydrogène sur la base de la mesure de conductivité thermique est réalisée par un circuit monté sur une plaque de circuit imprimé C42 dont les cosses à une extrémité C71 sont enfichées dans un connecteur C72 dans un boîtier de connexion C78 monté sur un support C73 à l'intérieur du manchon cylindrique C48. Un ensemble de conducteurs électriques C46 connectés à une extrémité dans le boîtier de connexion C78 parcourent l'intérieur du manchon cylindrique C48 et l'intérieur creux de la collerette C35 pour aboutir à un bouchon de cloisonnement isolant ou boîtier C75 qui ferme la partie supérieure de la chambre C36 à l'extrémité de l'embout d'extrémité du capteur C31. De plus, chaque conducteur C46 est raccordé électriquement à travers ce boîtier C75 à un plot respectif C77 formé sur la face inférieure du boîtier dans la chambre C36. Sur cette face inférieure est également collée la plaquette C32 de l'unité sensible C30 du capteur avec sa face sensible dirigée vers la chambre C36.

Le bouchon C75 est hermétiquement fixé à l'intérieur d'une chemise C76 à l'intérieur de l'embout creux C31 pour pouvoir résister à la pression du gaz dans la chambre C36, sachant qu'à sa face supérieure il est soumis à la pression ambiante dans l'espace où est installée la pile à combustible. Les conducteurs électriques C46 traversent le bouchon C75 dans des perles de verre pour éviter d'en altérer l'étanchéité de façon à ce que le gaz contenu dans la chambre C20 ne s'échappe pas.

Muni de l'ensemble de ces précautions, le capteur de concentration d'hydrogène C11, avec son unité sensible C30 autour de la plaquette C32 et l'unité de traitement C12 est opérationnel pour effectuer des mesures in situ de paramètres physiques caractérisant les propriétés du gaz contenu dans la chambre C20 et notamment de sa teneur en hydrogène qui est un paramètre d'intérêt primordial pour la conduite de la pile à combustible. Il s'est avéré que la réalisation de mesures in situ en continu ou quasi continu à l'intérieur d'un réacteur électrochimique était rendue opérationnellement faisable grâce à l'intégration au réacteur d'un capteur sensible à la conductivité thermique du gaz dans lequel est plongée sa tête sensible C30. La mesure de ce paramètre s'avère particulièrement adaptée à la détection des teneurs en hydrogène dans l'atmosphère d'un réacteur électrochimique tel qu'une pile à combustible. On sait en effet que la conductivité thermique de l'hydrogène est la plus élevée dans la nature en ce qui concerne les gaz. Cette propriété facilite sa détection parmi d'autres gaz, notamment l'oxygène et l'azote avec lesquels il est susceptible de se trouver mélangé dans la pile à combustible. On rappelle que pour effectuer ce type de mesure, le capteur comporte une plaquette de matériau qui est chauffée, par exemple au moyen d'une résistance parcourue par un courant électrique. En mesurant la puissance électrique consacrée au maintien d'une température déterminée on peut connaître la puissance dissipée par la déperdition de calories dans l'atmosphère où se trouve plongée la plaquette et en déduire la conductivité thermique du mélange de gaz ambiant.

Selon un autre aspect, un capteur de teneur en gaz, tel que C11 décrit précédemment, est utilisé dans la pile à combustible pour maintenir l'intégrité du système pendant l'extinction et la période de repos ou stockage qui s'ensuit. Spécifiquement l'unité de commande de la pile à combustible est programmée pour poursuivre la surveillance de la teneur en hydrogène du circuit de gaz combustible à partir de mesures périodiques commandées au capteur de concentration d'hydrogène C11 et vérifier que de l'hydrogène est toujours présent.

Le demandeur a pu déterminer qu'un capteur à conductivité thermique tel que C11 se prêtait également très bien à la détection d'un seuil de concentration relativement faible (quelques pourcent) à respecter dans le circuit hydrogène de la pile à combustible pour éviter que l'environnement des éléments sensibles à l'oxydation n'entre en pénurie d'hydrogène pendant la durée de la phase d'extinction de la pile à combustible ou ultérieurement pendant les périodes de repos. Pour prévenir cette condition, la procédure d'extinction peut avantageusement être opérée en fonction de l'information de concentration d'hydrogène fournie par le capteur de concentration d'hydrogène C11. Pendant la phase de repos qui lui succède, le capteur de concentration d'hydrogène C11 est réveillé périodiquement pour effectuer une mesure. Par exemple, lorsque l'unité de commande détecte l'imminence d'un telle condition dans les informations fournies par le capteur de concentration d'hydrogène C11, elle déclenche l'ouverture de la vanne de régulation de pression 117 pour permettre une décharge contrôlée d'une partie de l'hydrogène contenu dans la chambre d'accumulation 116 pour rétablir à un niveau programmé le taux d'hydrogène dans le circuit combustible du réacteur à l'extinction ou en état de stockage. Eventuellement, si la chambre d'accumulation est vide, la vanne d'admission d'hydrogène pur 110 est ouverte.

La procédure d'extinction décrite ci-dessus laisse la pile à combustible dans un état permettant de réaliser de façon automatique et sans aucune intrusion dans le système la méthode de mesure de perméabilité des membranes décrite dans la demande de brevet US 2004/124843. La procédure d'extinction décrite ci-dessus peut donc être suivie d'une mesure de perméabilité individuelle de chacune des membranes échangeuses d'ion, consistant à mesurer la tension individuelle de chacune des cellules de la pile à combustible, relever la dynamique avec laquelle chacune des tensions individuelles évolue et, lorsque ladite dynamique présente des signes caractéristiques pré-identifiés, activer un signal d'alerte indiquant que la pile à combustible nécessite une inspection.

La méthode décrite dans la demande de brevet US 2004/124843, rappelons-le, propose d'inonder le circuit anodique d'une pile à combustible avec de l'hydrogène et le circuit cathodique avec un gaz neutre. Cette différence de nature de gaz produit selon l'équation de Nernst's une différence de potentiel fonction de la pression et de la température. La perméabilité excessive d'une membrane favorise les échanges gazeux entre l'anode et la cathode, modifiant ainsi la nature du mélange gazeux de part et d'autre de la membrane et conduisant à une modification de la différence de potentiel mesurée. La perméabilité individuelle des membranes peut donc être évaluée par le biais d'une mesure de tension.

La mesure de tension individuelle des cellules d'une pile à combustible est un dispositif classique appelé CVM (Cell Voltage Monitoring) utilisé pour enregistrer la tension des cellules individuelles ou de groupe de plusieurs cellules durant la marche normale d'une pile à combustible. Les mesures de pression et de température sont également nécessaires à la marche normale d'une pile à combustible.

Il apparaît que la procédure d'extinction décrite dans la présente demande de brevet produit automatiquement les autres conditions nécessaires à la réalisation de la méthode de mesure de perméabilité des membranes décrite dans la demande de brevet US 2004/124843, à savoir la présence d'hydrogène à l'anode et la présence d'un gaz neutre à la cathode, c'est à dire de l'azote. Cela se produit à chaque extinction et sans aucune intrusion dans le système sans nécessiter de réservoir supplémentaire ce qui est un avantage, surtout pour les applications mobiles.

Un autre avantage de la procédure d'extinction décrite dans ce document est qu'elle conduit par nature à une consommation totale de l'oxygène résiduel par réaction électrochimique ce qui garantie l'absence d'oxygène à la cathode. Or un des inconvénients identifié plus haut à la méthode décrite dans la demande de brevet US 2004/124843 était justement sa sensibilité à la moindre trace d'oxygène résiduel qui pourrait complètement fausser la mesure de perméabilité.

Il est donc proposé ici de procéder à une mesure de perméabilité individuelle selon la méthode décrite dans la demande de brevet US 2004/124843, de façon automatique après chaque procédure d'extinction selon la procédure d'extinction décrite dans ce document.

La demande de brevet US 2004/124843 préconise un flux continu d'hydrogène à l'anode et de gaz neutre à la cathode, alors que la procédure d'extinction décrite dans ce document laissera la pile avec une quantité limitée de ces deux gaz emprisonnés au terme de l'extinction dans les circuits anodique et cathodique fermés. Il en résulte qu'il faudra s'intéresser à la dynamique de la mesure de différence de potentiel plutôt qu'à sa valeur finale qui tendra nécessairement vers 0 quand le mélange gazeux des deux chambres se sera homogénéisé après quelques minutes en raison de la perméabilité naturelle des membranes. Ceci n'est pas un inconvénient pour évaluer la perméabilité individuelle des membranes, au contraire cela permet de s'affranchir de la mesure de débit de gaz. En outre cela est plus économique en termes de consommation de gaz.

**Revendications**

1. Pile à combustible (1) formée par un empilage de cellules électrochimiques ayant chacune une anode et une cathode de part et d'autre d'une membrane polymère échangeuse d'ion, un système d'alimentation en gaz carburant côté anode des cellules électrochimiques et un système d'alimentation en gaz comburant côté cathode des cellules électrochimiques, le système d'alimentation en gaz carburant et comburant comportant :

- une vanne de coupure (110) pour un raccordement à un réservoir de stockage (11T) du gaz carburant, et une vanne de régulation de pression (117) dudit gaz carburant,
- un canal d'alimentation (11A) aux anodes, et
- une boucle de recyclage (11R) du gaz carburant, aboutissant sur le canal d'alimentation (11A) en aval de la vanne de régulation de pression (117) dudit gaz carburant,
- un canal d'alimentation (12A) en gaz comburant aux cathodes,
- une boucle de recyclage (12R) du gaz comburant,
- un dispositif de remplissage en air atmosphérique pressurisé,
- des moyens d'isolation de l'air atmosphérique permettant d'isoler le canal d'alimentation aux cathodes et ladite boucle de recyclage de l'air atmosphérique,

**caractérisée en ce que** le système d'alimentation en gaz carburant comporte une chambre d'accumulation additionnelle de gaz carburant (116) pour accumuler ledit gaz carburant et permettre sa décharge de manière contrôlée, branchée à un réseau de canaux d'alimentation du gaz carburant comportant le canal d'alimentation aux anodes, en aval de la vanne de coupure (110) et en amont de la vanne de régulation de pression (117) et **en ce qu'**il comporte un capteur de concentration d'hydrogène (C11) dans le système d'alimentation en gaz carburant côté anode,

2. Pile à combustible selon la revendication 1, dans lequel les moyens d'isolation de l'air atmosphérique comportent au moins une vanne d'isolation (128).

3. Pile à combustible selon la revendication 1, dans lequel les moyens d'isolation de l'air atmosphérique comportent un clapet anti-retour.

4. Pile à combustible selon la revendication 1, dans lequel les moyens d'isolation de l'air atmosphérique comportent une vanne de sortie (122) isolant ledit dispositif de remplissage de l'air atmosphérique.

5. Pile à combustible selon l'une des revendications 1 à 4, dans lequel le système d'alimentation en gaz comburant comporte en outre un raccordement du canal d'alimentation aux cathodes à un réservoir de stockage (12T) d'oxygène et, sur ledit raccordement, une vanne de coupure (120).

**6.** Pile à combustible selon l'une des revendications 1 à 5, dans lequel le dispositif de remplissage en air atmosphérique pressurisé comporte un orifice d'admission d'air (126), une vanne de coupure (128) et une pompe de gavage (129), installés sur une canalisation aboutissant sur le circuit d'alimentation en gaz comburant aboutissant à la pile à combustible 1.

**7.** Pile à combustible selon l'une des revendications 1 à 6, dans laquelle le système d'alimentation en gaz carburant comporte une pompe d'aspiration 119 et une vanne de coupure 118 installés sur une canalisation aboutissant à l'atmosphère et branchée sur la boucle de recyclage (11R) du gaz carburant

**8.** Pile à combustible selon la revendication 7, dans laquelle la pompe d'aspiration 119 est branchée sous un séparateur d'eau 114.

**Patentansprüche**

**1.** Brennstoffzelle (1), gebildet durch einen Stapel elektrochemischer Zellen, die jeweils eine Anode und eine Kathode beidseitig einer Ionenaustauscher-Polymermembran, ein Brenngas-Zuführsystem auf der Anodenseite der elektrochemischen Zellen und ein Sauerstoffträgergas-Zuführsystem auf der Kathodenseite der elektrochemischen Zellen aufweisen, wobei das Brenngas- und Sauerstoffträgergas-Zuführsystem umfasst:

• ein Absperrventil (110) für einen Anschluss an ein Brenngas-Speicherreservoir (11T) und ein Brenngas-Druckregelventil (117),
• eine Zuführleitung (11A) zu den Anoden und
• eine Brenngas-Umlaufschleife (11R), die an der Zuführleitung (11A) endet, die dem Brenngas-Druckregelventil (117) nachgeschaltet ist,
• eine Sauerstoffträgergas-Zuführleitung (12A) zu den Kathoden,
• eine Sauerstoffträgergas-Umlaufschleife (12R),
• eine Füllvorrichtung für atmosphärische Druckluft,
• Trennmittel für die atmosphärische Luft, die es ermöglichen, die Zuführleitung zu den Kathoden und die Umlaufschleife von der atmosphärischen Luft zu trennen,

**dadurch gekennzeichnet, dass** das Brenngas-Zuführsystem eine zusätzliche Brenngas-Sammelkammer (116) umfasst, um das Brenngas zu sammeln und seine Abgabe auf kontrollierte Weise zu ermöglichen, die an ein Netz von Brenngas-Zuführleitungen angeschlossen ist, das die Zuführleitung zu den Anoden, die dem Absperrventil (110) nachgeschaltet und dem Druckregelventil (117) vorgeschaltet ist, umfasst und dadurch, dass es einen Wasserstoffkonzentrationssensor (C11) im Brenngas-Zuführsystem auf der Anodenseite umfasst.

**2.** Brennstoffzelle nach Anspruch 1, bei der die Trennmittel für die atmosphärische Luft mindestens einen Trennschieber (128) umfassen.

**3.** Brennstoffzelle nach Anspruch 1, bei der die Trennmittel für die atmosphärische Luft ein Rückschlagventil umfassen.

**4.** Brennstoffzelle nach Anspruch 1, bei der die Trennmittel für die atmosphärische Luft einen Ausgangsschieber (122) umfassen, der die Füllvorrichtung für atmosphärische Luft (122) trennt.

**5.** Brennstoffzelle nach einem der Ansprüche 1 bis 4, bei der das Sauerstoffträgergas-Zuführsystem außerdem einen Anschluss der Zuführleitung zu den Kathoden an ein Sauerstoff-Speicherreservoir (12T) und an dem Anschluss einen Absperrschieber (120) umfasst.

**6.** Brennstoffzelle nach einem der Ansprüche 1 bis 5, bei der die Füllvorrichtung für atmosphärische Druckluft eine Lufteinlassöffnung (126), einen Absperrschieber (128) und eine Speisepumpe (129) umfasst, die in einer Leitung installiert sind, die im Sauerstoffträgergas-Zuführkreis endet, der an der Brennstoffzelle 1 endet.

**7.** Brennstoffzelle nach einem der Ansprüche 1 bis 6, bei der das Brenngas-Zuführsystem eine Saugpumpe (119) und ein Absperrventil (118) umfasst, die in einer Leitung installiert sind, die in der Atmosphäre endet und an die Brenngas-Umlaufschleife (11R) angeschlossen ist.

**8.** Brennstoffzelle nach Anspruch 7, bei der die Saugpumpe (119) unter einem Wasserabscheider (114) angeschlossen ist.

**Claims**

**1.** Fuel cell stack (1) formed by a stack of electrochemical cells each having an anode and a cathode on either side of a polymeric ion-exchange membrane, a fuel gas supply system on the anode side of the electrochemical cells and an oxidant gas supply system on the cathode side of the electrochemical cells, the fuel gas supply system comprising:

• a cut-off valve (110) for connection to a fuel gas storage tank (11T) and a pressure regulating valve (117) for said fuel gas;
• a supply channel (11A) to the anodes;

• a fuel gas recycling loop (11R) terminating in the supply channel (11A) downstream of the pressure regulating valve (117) for said fuel gas;
• a supply channel (12A) for supplying the cathodes with oxidant gas;
• an oxidant gas recycling loop (12R);
• a device for filling with pressurized atmospheric air; and
• means of isolation from the atmospheric air, enabling the supply channel to the cathodes and said recycling loop to be isolated from the atmospheric air,

**characterized in that** the oxidant gas supply system includes an additional fuel gas accumulation chamber (116) for accumulating said fuel gas, which is connected to the network of fuel gas supply channels, downstream of the cut-off valve (110) and upstream of the pressure regulating valve (117), and **in that** it includes a hydrogen concentration sensor (C11) in the fuel gas supply system on the anode side.

2. Fuel cell stack according to Claim 1, in which the means of isolation from the atmospheric air comprise at least one isolating valve (128).

3. Fuel cell stack according to Claim 1, in which the means of isolation from the atmospheric air comprise a non-return valve.

4. Fuel cell stack according to Claim 1, in which the means of isolation from the atmospheric air comprise an output valve (122) isolating said filling device from the atmospheric air.

5. Fuel cell stack according to one of Claims 1 to 4, in which the oxidant gas supply system further includes a connection of the cathode supply channel to an oxygen storage tank (12T) and, on said connection, a cut-off valve (120).

6. Fuel cell stack according to one of Claims 1 to 5, in which the device for filling with pressurized atmospheric air comprises an air intake orifice (126), a cut-off valve (128) and a booster pump (129), these being installed on a line terminating in the oxidant gas supply circuit terminating in the fuel cell stack 1.

7. Fuel cell stack according to one of Claims 1 to 6, in which the fuel gas supply system comprises a suction pump 119 and a cut-off valve 118, these being installed on a line venting to atmosphere and connected to the fuel gas recycling loop (11R).

8. Fuel cell stack according to Claim 7, in which the suction pump 119 is connected beneath the water separator 114.

**Fig. 1**

Fig. 2

EP 2 494 642 B1

Fig. 3

16

06.05.2009 (1557.35Hours-4629 SS-Cycles)    20 cells id10 FC    Shut Down with N2 Generation

**Fig. 4**

STOP

Arrêt $O_2$ & $H_2$
Maintien Is

V > Vs — OUI

NON

Réduire Is

V > Vo ? — OUI

NON

Activer gavage air

V > Vo ? — OUI

NON

Interrompre Is
Arrêt gavage air
Activer aspiration $H_2$

P $H_2$ > 0,5 bara — OUI

NON

Arrêt aspiration $H_2$

FIN

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 06012954 A
- US 6939633 B
- US 20090220832 A
- US 2007193340 A1
- US 2004124843 A